# DEMANDE DE BREVET EUROPEEN

(11) **EP 2 133 607 A1**
(43) Date de publication de la demande: **16.12.2009**
(21) Numéro de dépôt: 09305536.6
(22) Date de dépôt: 12.06.2009
(51) Int. Cl.: F16J 15/34, B25J 19/00

(54) **Dispositif formant raccord étanche à liberté de rotation**

(30) Priorité: 13.06.2008 FR 0803332
(71) Demandeur: Societe D'Innovations Techniques SIT, 86100 Chatellerault (FR)
(72) Inventeur: Garnier, André, 86200, LOUDUN (FR)
(74) Mandataire: Laget, Jean-Loup

(57) **Abrégé**

L'invention concerne un dispositif formant raccord étanche à liberté de rotation, du type comportant un moyen annulaire de fixation d'un soufflet (1) de protection et une pièce centrale (8) contenant des moyens de transmission mécanique de mouvement, qui est caractérisé par le fait que le dispositif comporte deux joints (18, 19) montés en sens inverse l'un de l'autre pour assurer l'étanchéité entre deux espaces à séparer, quel que soit le sens de la différence de pression ou de dépression entre ces deux espaces.

## Description

L'invention est relative à un dispositif formant raccord étanche à liberté de rotation.

L'invention est particulièrement utile pour l'équipement de télémanipulateurs de produits dangereux contenus dans une enceinte étanche présentant une différence de pression avec l'environnement ou le poste de travail de l'opérateur.

Pour des applications nucléaires, bactériologiques, chimiques, on isole les produits nucléaires, bactériologiques ou chimiques dangereux pour un opérateur, dans des enceintes étanches présentant au moins une paroi traversée par un moyen de manipulation étanche.

En particulier, les télémanipulateurs de produits dangereux sont rendus étanches en équipant leurs traversées d'un soufflet d'étanchéité ou "booting" raccordé à la paroi de l'enceinte et immobilisé sur un raccord étanche monté près de l'extrémité distale du télémanipulateur.

On connaît de tels raccords étanches, par exemple ceux du genre décrit dans le document FR 2 573 493 ou ceux du genre décrit dans le document FR 2 683 479.

D'une manière connue, les raccords étanches équipant l'extrémité des soufflets de protection ou "booting" sont disposés au voisinage immédiat de l'extrémité du télémanipulateur servant au montage d'un outil ou d'une pince de préhension.

L'extrémité distale du soufflet de protection ou "booting" est fixée de façon étanche sur un anneau de fixation comportant une partie en forme de rondelle tournée vers la pince ou l'outil, et une partie tubulaire tournée vers le bras esclave du télémanipulateur et disposée de manière que l'anneau présente une section en T.

La fixation du soufflet de protection ou "booting" est assurée par pincement à l'aide d'un écrou annulaire vissé sur un filetage formé sur la surface extérieure de ladite partie tubulaire tournée vers le bras esclave du télémanipulateur

De cette manière, l'écrou annulaire et le filetage précités se trouvent tous deux placés à l'intérieur du soufflet de protection lorsqu'il est pincé par vissage.

Une collerette en saillie sur la surface extérieure du corps est prévue pour constituer une butée limitant tout mouvement axial de l'anneau de fixation du soufflet de protection ou "booting".

Une pièce annulaire de plus petit diamètre est fixée de manière à délimiter un logement annulaire de section sensiblement carrée ouvert en direction de l'outil ou de la pince de préhension portée par le télémanipulateur.

Le logement annulaire de section sensiblement carrée est prévu pour recevoir un joint d'étanchéité annulaire à section sensiblement en forme de U, dont une branche est en contact étanche avec la partie solidaire du bras esclave du télémanipulateur présentant une liberté de rotation, et dont une autre branche est en contact étanche avec la partie solidaire du soufflet de protection ou "booting" montée sans liberté de rotation dans l'enceinte étanche.

Le raccord étanche du document FR 2 683 479 permet ainsi d'obtenir une rotation libre de l'outil ou de la pince de préhension, sans imprimer de rotation ou de vrillage du soufflet de protection ou "booting".

En outre, la dépression qui règne à l'intérieur de l'enceinte étanche a pour effet d'améliorer la qualité de l'étanchéité en plaquant la lèvre flexible du joint à section en U contre la surface adjacente de l'anneau de montage du soufflet de protection ou "booting".

Ainsi, lorsque la différence de pression correspond au fonctionnement normal prédéterminé du dispositif, la dépression régnant à l'intérieur de l'enceinte ou la surpression régnant à l'intérieur du soufflet de protection ou "booting" a pour effet d'augmenter la qualité de l'étanchéité en plaquant la lèvre du joint à section en U contre la paroi adjacente de l'anneau de fixation du soufflet de protection ou "booting".

Cependant, dans le cas de coup de bélier, choc de pression, démarrage de l'unité, ou tout autre événement instantané en régime intermédiaire ou accidentel, la différence de pression risque de s'inverser, et le plaquage de la lèvre du joint à section en U n'est plus assuré contre la paroi adjacente de l'anneau de fixation du soufflet de protection ou "booting".

Un premier but de l'invention est de remédier aux inconvénients de la technique connue du document FR 2 683 479, en proposant un nouveau dispositif insensible aux chocs de pression ou aux inversions accidentelles de pression.

Un deuxième but de l'invention est de fournir un nouveau dispositif présentant un encombrement sensiblement voisin ou identique à l'encombrement des dispositifs de l'art antérieur, de manière à permettre son utilisation sur les télémanipulateurs existants, en particulier les télémanipulateurs déjà installés.

L'invention a pour objet un dispositif formant raccord étanche à liberté de rotation, du type comportant un moyen annulaire de fixation d'un soufflet de protection et une pièce centrale contenant des moyens de transmission mécanique de mouvement, qui est caractérisé par le fait que le dispositif comporte deux joints montés en sens inverse l'un de l'autre, pour assurer l'étanchéité entre deux espaces à séparer, quel que soit le sens de la différence de pression ou de dépression entre ces deux espaces.

Selon d'autres caractéristiques alternatives de l'invention :
- le corps contient des moyens de transmission mécanique pourvus d'une liaison à baïonnette ;
- le corps ou pièce centrale est entouré d'une chemise comportant une collerette formant butée pour un premier joint d'étanchéité et une jupe définissant un logement et formant butée pour un deuxième joint d'étanchéité monté en sens inverse du premier joint d'étanchéité;
- le moyen ou soufflet de protection est pincé sur une pièce annulaire par vissage d'un écrou annulaire coopérant avec un filetage de la pièce annulaire;
- la pièce annulaire comporte d'une part une cloison servant à séparer les joints d'étanchéité montés en sens inverse l'un de l'autre, et un retour fileté extérieurement pour recevoir l'écrou annulaire de pincement du moyen d'étanchéité ou soufflet de protection ;
- chaque joint est un joint d'étanchéité comportant une partie rigide et une lèvre mobile apte à être plaquée contre la face adjacente d'une cloison par une différence de pression ;
- les joints d'étanchéité sont séparés par une cloison unique contre les faces de laquelle viennent se plaquer les lèvres mobiles des joints d'étanchéité, selon la différence de pression régnant de part et d'autre de la cloison ;
- les joints d'étanchéité sont montés sur un même diamètre d'une chemise enserrant la pièce centrale ou corps du dispositif de manière étanche ;
- chaque joint d'étanchéité possède une branche rigide montée adjacente à une cloison d'une pièce annulaire liée au corps de la transmission mécanique ;
- au moins un joint présente une section en U ou en V avec une branche rigide et une branche mobile ou déformable destinée à être plaquée contre une cloison d'une pièce annulaire solidaire sans liberté de rotation du soufflet ou moyen de protection.

L'invention sera mieux comprise grâce à la description qui va suivre donnée à titre d'exemple non limitatif en référence aux dessins annexés dans lesquels :
La figure 1 représente schématiquement une vue en élévation avec coupe partielle d'un dispositif formant raccord étanche à liberté de rotation selon l'invention, équipant l'extrémité d'un bras esclave de télémanipulateur.
La figure 2 représente schématiquement une vue en coupe diamétrale d'un dispositif formant raccord étanche à liberté de rotation selon l'invention.

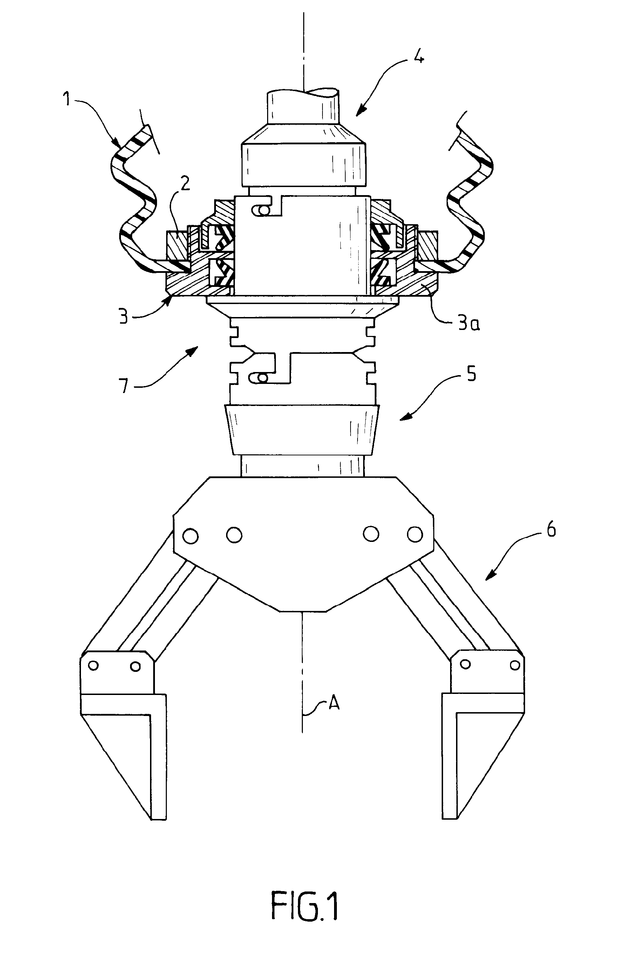

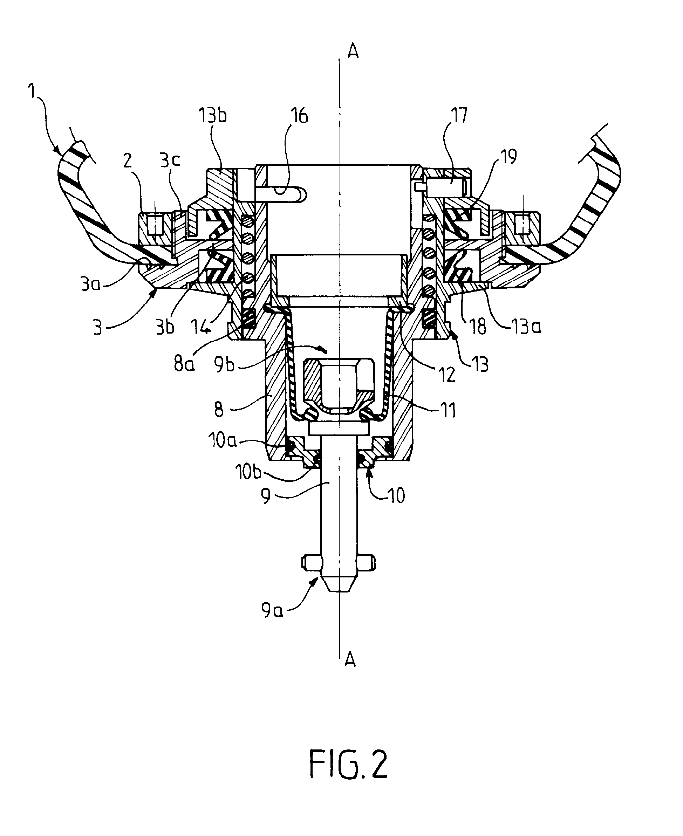

En référence aux figures 1 et 2, les éléments identiques ou fonctionnellement équivalents sont repérés par des chiffres de référence identiques.

Sur la figure 1, une extrémité de bras esclave de télémanipulateur est équipée d'un soufflet 1 de protection ou "booting".

Le soufflet 1 de protection est pincé à son extrémité distale par vissage d'un écrou annulaire 2 de fixation sur un filetage d'une pièce annulaire 3 comportant une collerette 3a de fixation.

L'ensemble du soufflet 1 de protection, de l'écrou annulaire 2 de fixation et de la pièce 3 de fixation est monté solidaire d'une enceinte de confinement étanche non représentée et reste fixe sans liberté de rotation, lorsque le télémanipulateur effectue des mouvements de rotation autour de son axe A.

L'extrémité du bras esclave de télémanipulateur comporte un raccord 4 dit « raccord de télémanipulateur », un raccord 5 dit « raccord d'outil ou raccord de pince » pour une pince 6 et un raccord étanche 7 à liberté de rotation selon l'invention.

Le raccord 4 de télémanipulateur et le raccord étanche 7 à liberté de rotation selon l'invention sont liés entre eux par une liaison à baïonnette, par exemple une liaison du type décrit dans le document FR 2 573 493.

Le raccord étanche 7 à liberté de rotation et le raccord 5 d'outil ou de pince sont également liés par une liaison à baïonnette, par exemple une liaison du type décrit dans le document FR 2 573 493.

Sur la figure 2, un dispositif formant raccord étanche à liberté de rotation selon l'invention comporte un corps central 8 de forme généralement cylindrique.

Le corps central 8 de forme généralement cylindrique contient un équipage mobile 9 permettant de transmettre des poussées de translation, avec liberté de rotation.

L'équipage mobile 9 comporte une tête 9a et une extrémité terminale 9b destinée à coopérer avec des éléments analogues respectivement du raccord de pince ou d'outil et du raccord de bras esclave de télémanipulateur.

L'équipage mobile 9 coulisse à travers une douille 10 de montage munie de deux joints toriques 10a, 10b d'étanchéité, et est monté à l'aide d'un soufflet d'étanchéité 11 maintenu par une pièce annulaire de fixation 12 à l'intérieur du corps 8.

Une chemise annulaire 13 comportant une collerette 13a formant butée entoure le corps 8, de manière étanche grâce à un joint torique 8a, pour emprisonner un ressort 14 d'encliquetage et définir un logement pour ce ressort 14 d'encliquetage de liaison à baïonnette.

Une échancrure 16 de liaison à baïonnette est prévue ainsi qu'un pion 17 de verrouillage et de visualisation de liaison à baïonnette, pour coopérer avec des éléments complémentaires analogues d'un raccord de télémanipulateur non représenté.

La chemise 13 comporte, d'une part, la collerette 13a formant butée et, d'autre part, une extrémité 13b en forme de jupe définissant un logement de section sensiblement carrée.

La pièce annulaire 3 comporte une cloison 3b et un retour 3c sur lequel est pratiqué le filetage coopérant avec l'écrou annulaire 2.

Avantageusement, la collerette 13a et la pièce annulaire 3 définissent un premier logement apte à recevoir un joint d'étanchéité 18, et la jupe 13b et la pièce annulaire 3 définissent un deuxième logement apte à recevoir un joint d'étanchéité 19.

Selon l'invention, les joints 18 et 19 sont des joints montés en sens contraire l'un de l'autre, pour assurer l'étanchéité entre deux espaces à séparer, quel que soit le sens de la différence de pression ou de dépression entre ces deux espaces.

Les deux joints d'étanchéité 18 et 19 sont des joints à lèvre mobile, de préférence identiques.

Le montage de deux joints d'étanchéité à lèvres mobiles 18 et 19 aptes à être plaquées chacune contre une paroi adjacente de la cloison 3b de la pièce annulaire 3 empêche toute migration indésirable de produits nucléaires, bactériologiques ou chimiques dangereux.

De préférence, les joints 18 et 19 sont des joints sensiblement en forme de U ou de V possédant une branche relativement rigide et une branche relativement mobile apte à être plaquée par une différence de pression contre une paroi adjacente.

Lorsque la pression du côté de l'outil ou de la pince de travail est supérieure à la pression intérieure au soufflet 1 de protection, la lèvre mobile du joint 18 est plaquée contre la face adjacente de la cloison 3b et assure ainsi l'étanchéité entre l'espace intérieur à la cellule de confinement étanche et l'intérieur du soufflet 1 de protection ou "booting", de manière à éviter toute transmission de produits nucléaires, bactériologiques ou chimiques vers l'extérieur de la cellule de confinement.

Dans le cas accidentel d'une inversion de pression, où la cellule de confinement étanche se trouve brutalement en dépression, c'est alors la lèvre mobile du joint 19 qui vient se plaquer contre la paroi adjacente de la cloison 3b de la pièce annulaire 3.

Ainsi, grâce à l'invention, l'étanchéité est toujours assurée quel que soit le sens de la différence de pression entre l'espace intérieur à la cellule de confinement étanche et l'extérieur correspondant au télémanipulateur ou au poste d'opération.

L'invention, décrite en référence à un mode de réalisation particulier, n'y est nullement limitée, mais couvre au contraire toute modification de forme et toute variante de réalisation dans le cadre et l'esprit de l'invention.

Ainsi, la disposition géométrique des joints montés en sens inverse l'un de l'autre peut être modifiée sans sortir du cadre de la présente invention.

En particulier, au lieu d'être montés sur un même diamètre, des joints à lèvres mobiles pourraient être montés sur deux diamètres différents moyennant une adaptation des cloisons 13a, 13b, 3b et/ou des pièces annulaires 3 et 13.

L'essentiel est, selon l'invention, que les différences de pression ne permettent pas aux particules de produits nucléaires, bactériologiques ou chimiques de se déplacer à l'extérieur des logements prévus pour les joints 18 et 19 d'étanchéité.

## Revendications

1. Dispositif formant raccord étanche à liberté de rotation, du type comportant un moyen annulaire de fixation d'un soufflet (1) de protection et une pièce centrale (8) contenant des moyens de transmission mécanique de mouvement,
**caractérisé par le fait que** le dispositif comporte deux joints (18, 19) montés en sens inverse l'un de l'autre, pour assurer l'étanchéité entre deux espaces à séparer, quel que soit le sens de la différence de pression ou de dépression entre ces deux espaces.

2. Dispositif selon la revendication 1, **caractérisé par le fait que** le corps contient des moyens de transmission mécanique pourvus d'une liaison à baïonnette.

3. Dispositif selon la revendication 1 ou 2, **caractérisé par le fait que** le corps (8) ou pièce centrale est entouré d'une chemise (13) comportant une collerette (13a) formant butée pour un premier joint d'étanchéité et une jupe définissant un logement et formant butée pour un deuxième joint d'étanchéité (19) monté en sens inverse du premier joint (18) d'étanchéité.

4. Dispositif selon l'une quelconque des revendications précédentes, **caractérisé par le fait que** le moyen ou soufflet de protection (1) est pincé sur une pièce annulaire (3) par vissage d'un écrou annulaire (2) coopérant avec un filetage de la pièce annulaire (3).

5. Dispositif selon la revendication 4, **caractérisé par le fait que** la pièce annulaire (3) comporte d'une part une cloison (3b) servant à séparer les joints (18, 19) d'étanchéité montés en sens inverse l'un de l'autre, et un retour (3c) fileté extérieurement pour recevoir l'écrou annulaire (2) de pincement du moyen (1) d'étanchéité ou soufflet de protection.

6. Dispositif selon l'une quelconque des revendications précédentes, **caractérisé par le fait que** chaque joint (18 ou 19), est un joint d'étanchéité comportant une partie rigide et une lèvre mobile apte à être plaquée contre la face adjacente d'une cloison (3b) par une différence de pression.

7. Dispositif selon la revendication 6, **caractérisé par le fait que** les joints d'étanchéité (18, 19) sont séparés par une cloison unique (3b) contre les faces de laquelle viennent se plaquer les lèvres mobiles des joints d'étanchéité (18 et 19), selon la différence de pression régnant de part et d'autre de la cloison (3b).

8. Dispositif selon l'une quelconque des revendications précédentes, **caractérisé par le fait que** les joints d'étanchéité (18 et 19) sont montés sur un même diamètre d'une chemise (13) enserrant la pièce centrale (8) ou corps du dispositif de manière étanche.

9. Dispositif selon la revendication 8, **caractérisé par le fait que** chaque joint d'étanchéité (18 ou 19) possède une branche rigide montée adjacente à une cloison (13a, 13b) d'une pièce annulaire (3) liée au corps (8) de la transmission mécanique.

10. Dispositif selon l'une quelconque des revendications précédentes, **caractérisé par le fait qu'**au moins un joint (18 ou 19) présente une section en U ou en V avec une branche rigide et une branche mobile ou déformable destinée à être plaquée contre une cloison (3b) d'une pièce annulaire solidaire sans liberté de rotation du soufflet ou moyen (1) de protection.
